# EUROPEAN PATENT APPLICATION

(11) **EP 4 120 789 A1**
(43) Date of publication of application: **18.01.2023**
(21) Application number: 21774576.9
(22) Date of filing: 29.03.2021
(51) Int. Cl.: H04W 76/18, H04W 76/19, H04W 84/04, H04W 88/08

(54) **DEVICE AND METHOD FOR FAILURE RECOVERY OF MASTER CELL GROUP IN ACCESS AND BACKHAUL COMBINATION SYSTEM**

(30) Priority: 27.03.2020 KR 20200037820; 10.04.2020 KR 20200044022
(71) Applicant: Samsung Electronics Co., Ltd., Gyeonggi-do 16677 (KR)
(72) Inventor: HWANG, June, Suwon-si, Gyeonggi-do 16677 (KR)
(74) Representative: HGF
(86) International application number: PCT/KR2021/003843
(87) International publication number: WO 2021/194322

(57) **Abstract**

The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. According to an embodiment of the present invention, a method of a third integrated access and backhaul (IAB) node in a wireless communication system comprises receiving, from a first IAB node related to a first cell group of the third IAB node, a backhaul RLF indicator related to a recovery failure of a radio link failure (RLF) for a backhaul of the first IAB node; determining that an RLF for the first cell group is detected based on the backhaul RLF indicator; and transmitting, to an IAB donor through a second IAB node related to a second cell group of the third IAB node, a message including backhaul RLF information indicating that the RLF for the first cell group is associated with the RLF for the backhaul of the first IAB node.

## Description

### [Technical Field]

The disclosure provides a method for operating forward information necessary when re-accessing a network of a terminal part in a wireless integrated access and backhaul system.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications. In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Integrated access and backhaul (IAB) is a kind of relay node, in which one node operates as a mobile terminal (MT) (or terminal or user equipment (UE)) in relation to an upper IAB node, and operates as a base station in relation to a lower IAB node. For example, the node may gather upward traffic coming from the lower IAB node and upward traffic of a normal terminal that has accessed the node and deliver the same as upward traffic to the upper IAB node, and deliver traffic delivered downwards from a core network to the lower IAB node as downward traffic or deliver the same as downward traffic to the normal terminal that has accessed the node. IAB may refer to a single node performing operations of communicating with the upper IAB node, in the above process, and communicating with the lower IAB node and the terminal, thereby combining access and backhaul communication operations, and a topological system including the node. A node directly connected to the core network is defined as an IAB donor, and the IAB donor may be connected to the core network by using an IP address system, without having an upper IAB node.

### [Disclosure of Invention]

### [Technical Problem]

The disclosure proposes a method for re-accessing a network more efficiently in a wireless communication system including multiple hops of an IAB node, wherein an intermediate node having a failure that can be recognized by an RRC layer, such as a radio link failure, notifies a fact of failure to a donor base station and receives a corresponding command from the network.

### [Solution to Problem]

In order to solve the above-mentioned problems, a method of a third integrated access and backhaul (IAB) node in a wireless communication system according to an embodiment of the disclosure may include: receiving, from a first IAB node related to a first cell group of the third IAB node, a backhaul RLF indicator related to a recovery failure of a radio link failure (RLF) for a backhaul of the first IAB node; determining that an RLF for the first cell group is detected based on the backhaul RLF indicator; and transmitting, to an IAB donor through a second IAB node related to a second cell group of the third IAB node, a message including backhaul RLF information indicating that the RLF for the first cell group is associated with the RLF for the backhaul of the first IAB node.

In addition, according to another embodiment of the disclosure, a method of a first integrated access and backhaul (IAB) node in a wireless communication system may include: detecting a recovery failure of a radio link failure (RLF) for a backhaul of the first IAB node; and transmitting, to a third IAB node, a backhaul RLF indicator related to the recovery failure of the RLF for the backhaul of the first IAB node, wherein the first IAB node is related to a first cell group of the third IAB node, wherein an RLF for the first cell group is determined to be detected based on the backhaul RLF indicator, and wherein a message including backhaul RLF information indicating that the RLF for the first cell group is associated with the RLF for the backhaul of the first IAB node is transmitted to an IAB doner node through a second IAB node related to a second cell group of the third IAB node.

In addition, according to another embodiment of the disclosure, a third integrated access and backhaul (IAB) node in a wireless communication system may include: a transceiver; and a controller configured to: control the transceiver to receive, from a first IAB node related to a first cell group of the third IAB node, a backhaul RLF indicator related to a recovery failure of a radio link failure (RLF) for a backhaul of the first IAB node, determine that an RLF for the first cell group is detected based on the backhaul RLF indicator, and control the transceiver to transmit, to an IAB donor through a second IAB node related to a second cell group of the third IAB node, a message including backhaul RLF information indicating that the RLF for the first cell group is associated with the RLF for the backhaul of the first IAB node.

In addition, according to another embodiment of the disclosure, a first integrated access and backhaul (IAB) node in a wireless communication system may include: a transceiver; and a controller configured to: detect a recovery failure of a radio link failure (RLF) for a backhaul of the first IAB node, and control the transceiver to transmit, to a third IAB node, a backhaul RLF indicator related to the recovery failure of the RLF for the backhaul of the first IAB node, wherein the first IAB node is related to a first cell group of the third IAB node, wherein an RLF for the first cell group is determined to be detected based on the backhaul RLF indicator, and wherein a message including backhaul RLF information indicating that the RLF for the first cell group is associated with the RLF for the backhaul of the first IAB node is transmitted to an IAB doner node through a second IAB node related to a second cell group of the third IAB node.

### [Advantageous Effects of Invention]

According to an embodiment of the disclosure, in a wireless communication system including multiple hops of an IAB node, an intermediate node having a failure that can be recognized by an RRC layer, such as a radio link failure, notifies a fact of failure to a donor base station and receives a corresponding command from a network, so as re-access more efficiently to the network.

According to another embodiment of the disclosure, when a radio link failure occurs, or after RRC release, or when performing re-establishment, if information of cells connected to an old IAB donor is provided, a terminal re-accesses a cell connected to the old IAB donor, if possible, when accessing a network again later, and can re-access the network more efficiently due to the absence of additional overhead of the terminal and the base station resulting from PDCP lossless transmission and security refresh.

### [Brief Description of Drawings]

FIG. 1 is a diagram illustrating a structure of an existing LTE system.
FIG. 2 is a diagram illustrating a radio protocol structure of an existing LTE system.
FIG. 3 is a diagram illustrating a structure of a next-generation mobile communication system to which the disclosure may be applied.
FIG. 4 is a diagram illustrating a radio protocol structure of a next-generation mobile communication system to which the disclosure may be applied.
FIG. 5 is a diagram illustrating a UE apparatus according to embodiments of the disclosure.
FIG. 6 is a diagram illustrating a base station apparatus according to embodiments of the disclosure.
FIG. 7 is a diagram illustrating a case of MCG failure through RLF detection in an SA situation.
FIG. 8 is a diagram illustrating a case of MCG failure through RLF notification in an SA situation.
FIG. 9 is a diagram illustrating a case of SCG failure through RLF detection in an SA situation.
FIG. 10 is a diagram illustrating a case of SCG failure through RLF notification in an SA situation.
FIG. 11 is a diagram illustrating a case of SCG failure through RLF detection in an NSA situation.
FIG. 12A is a diagram illustrating a case of SCG failure through RLF notification in an NSA situation.
FIG. 12B is a diagram illustrating a case in which RLF recovery failure notification due to SCG release is transmitted.
FIG. 13A is a flowchart illustrating a cell selection operation for a mobile terminal (MT) to access an IAB node included in the same donor gNB during connection re-establishment.
FIG. 13B is a diagram illustrating a case in which an MT receives an indicator related to a current donor gNB/CU through an RRC message when combining an IAB network.
FIG. 13C is a diagram illustrating a case in which an MT receives information on cell IDs that are currently accessible under the donor gNB/CU through an RRC message when combining an IAB network.
FIG. 14 is a flowchart illustrating a cell selection operation for an MT not to access its lower IAB node during connection re-establishment.

### [Mode for the Invention]

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea. For the same reason, in the accompanying drawings, some elements may be exaggerated, omitted, or schematically illustrated. Further, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Herein, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description of the disclosure, terms and names defined in the 3rd generation partnership project long term evolution (3GPP LTE) standards will be used for the convenience of description. However, the disclosure is not limited by these terms and names, and may be applied in the same way to systems that conform other standards.

According to an embodiment of the disclosure, in a case where communication between a core network and UEs is made in a topology consisting of multiple hops of an IAB node, the connection point on the core network side may be an IAB donor node. This donor node includes a centralized unit (CU) and controls operations related to control of a distributed unit (DU) and data transmission/reception to/from the terminal through the DU. When the connection fails, the terminal part (mobile terminal; MT, terminal, or user equipment; UE) of an intermediate IAB node or a terminal receiving service from the IAB node notifies the reason why a problem occurs in the MCG or SCG link to the network. In this case, not only the reason for detecting the existing radio link failure (RLF), but also information indicating that the parent IAB node is disconnected from the network may be notified. Accordingly, the network may know that the parent IAB node of the IAB node that has reported the failure also has a problem, and may instruct a movement (mobility) to an IAB node other than the corresponding parent IAB node when selecting a cell. In addition, in the cell selection process of the IAB node after failure, a white list that allows only IAB nodes under the same donor gNB to be re-selected and a blacklist of cell selection for a purpose of preventing the selection of one's descendant IAB node may be introduced.

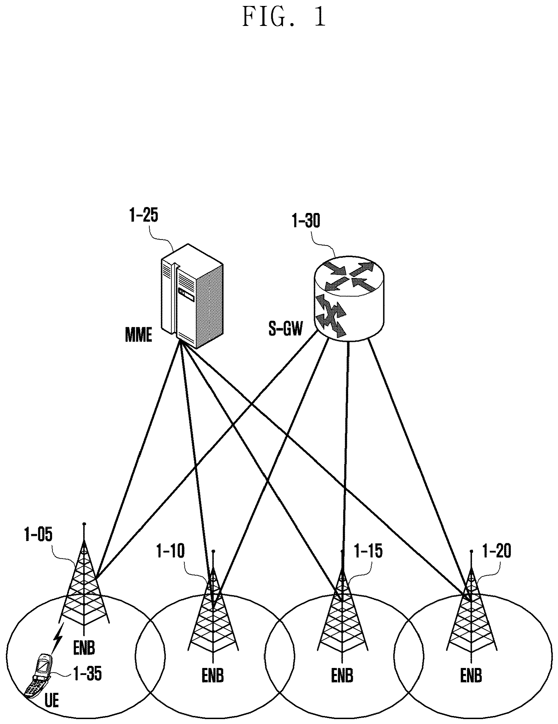

FIG. 1 is a diagram illustrating a structure of an existing LTE system.

Referring to FIG. 1, as illustrated, a radio access network of the LTE system may consist of a next-generation base station (Evolved Node B, hereinafter ENB, Node B or base station) 1-05, 1-10, 1-15, and 1-20, a mobility management entity (MME) 1-25, and a serving-gateway (S-GW) 1-30. A user equipment (hereinafter UE or terminal) 1-35 may access an external network through the ENBs 1-05 to 1-20 and the S-GW 1-30.

In FIG. 1, the ENBs 1-05 to 1-20 may correspond to the existing Node B of a UMTS system. The ENBs may be connected to the UE 1-35 through a radio channel and may perform a more complex role than the existing Node B. In the LTE system, all user traffic, including real-time services such as Voice over IP (VoIP) through Internet protocol, may be serviced through shared channels. Accordingly, a device for scheduling by collecting status information such as a buffer status of the UEs, an available transmission power status, a channel status, etc. is required, and the ENBs 1-05 to 1-20 may be responsible for the device. One ENB may typically control multiple cells. For example, in order to implement a transmission rate of 100 Mbps, the LTE system may use, for example, orthogonal frequency division multiplexing (OFDM) in a 20 MHz bandwidth as a radio access technology. In addition, an adaptive modulation & coding (AMC) scheme determining a modulation scheme and a channel coding rate based on the channel state of the UE may be applied. The S-GW 1-30 is a device that provides a data bearer, and may generate or remove the data bearer under the control of the MME 1-25. The MME is a device in charge of various control functions as well as a mobility management function for the UE, and may be connected to a plurality of base stations.

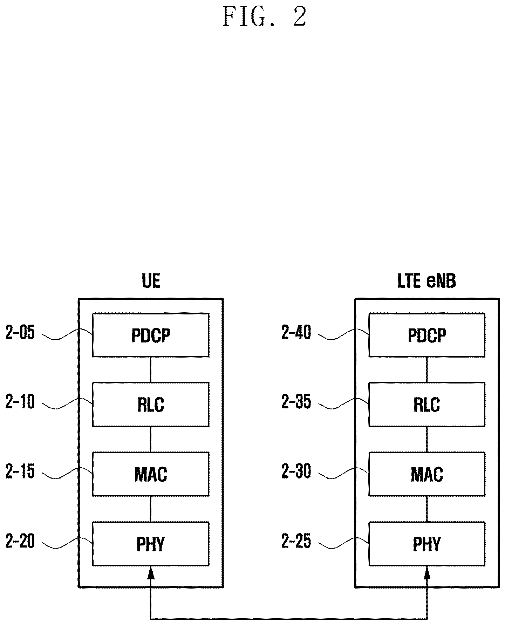

FIG. 2 is a diagram illustrating a radio protocol structure of an existing LTE system. Referring to FIG. 2, the radio protocol of the LTE system may consist of a packet data convergence protocol (PDCP) 2-05 and 2-40, a radio link control (RLC) 2-10 and 2-35, and a medium access control (MAC) 2-15 and 2-30 in the UE and ENB, respectively. The PDCP is responsible for operations of IP header compression/ decompression, etc. Main functions of PDCP may be summarized as follows.
- Header compression and decompression (ROHC only)
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink.

The radio link control (RLC) 2-10 and 2-35 may perform ARQ operation by reconfiguring a PDCP packet data unit (PDU) to an appropriate size. Main functions of the RLC are summarized below.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MACs 2-15 and 2-30 may be connected to several RLC layers configured in one UE, and may perform operations of multiplexing RLC PDUs into MAC PDUs and demultiplexing RLC PDUs from MAC PDUs. Main functions of the MAC may be summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

The physical layer 2-20 and 2-25 may channel-code and modulate upper layer data, make OFDM symbols and transmits the OFDM symbols through a radio channel, or may demodulate and channel-decode the OFDM symbols received through the radio channel and transmits them to upper layers.

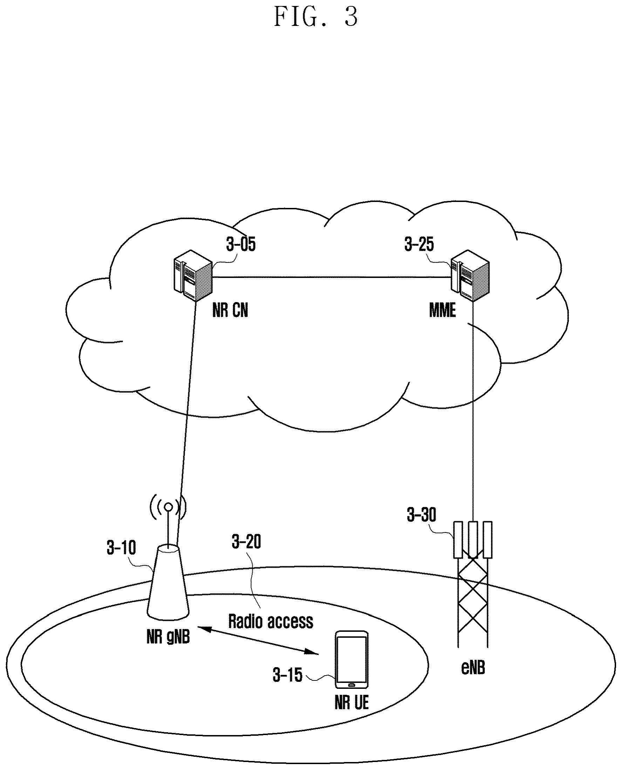

FIG. 3 is a diagram illustrating a structure of a next-generation mobile communication system to which the disclosure may be applied.

Referring to FIG. 3, a radio access network of the next-generation mobile communication system (hereinafter referred to as NR or 2G) may be composed of a next-generation base station (New Radio Node B, hereinafter NR gNB or NR base station) 3-10 and a new radio core network (NR CN) 3-05. A new radio user equipment (NR UE or UE) 3-15 may access an external network through an NR gNB 3-10 and an NR CN 3-05.

In FIG. 3, the NR gNB 3-10 may correspond to an Evolved Node B (eNB) of the existing LTE system. The NR gNB may be connected to the NR UE 3-15 through a radio channel and may provide a service superior to that of the existing Node B. In the next-generation mobile communication system, all user traffic may be serviced through the shared channel. Accordingly, a device for scheduling by collecting status information such as a buffer status of the UEs, an available transmission power status, a channel status, etc. is required, and the NR NB 3-10 may be responsible for this. One NR gNB may control multiple cells. In the next-generation mobile communication system, a bandwidth greater than or equal to the existing maximum bandwidth may be applied to implement ultra-high-speed data transmission compared to current LTE. In addition, additional beamforming technology may be grafted by using orthogonal frequency division multiplexing (OFDM) as a radio access technology. In addition, an adaptive modulation & coding (hereinafter, referred to as AMC) scheme for determining a modulation scheme and a channel coding rate according to the channel state of the UE may be applied. The NR CN 3-05 may perform functions such as mobility support, bearer configuration, QoS configuration, and the like. The NR CN is a device in charge of various control functions as well as a mobility management function for the UE, and may be connected to a plurality of base stations. In addition, the next-generation mobile communication system may be linked with the existing LTE system, and the NR CN may be connected to the MME 3-25 through a network interface. The MME may be connected to the existing base station eNB 3-30.

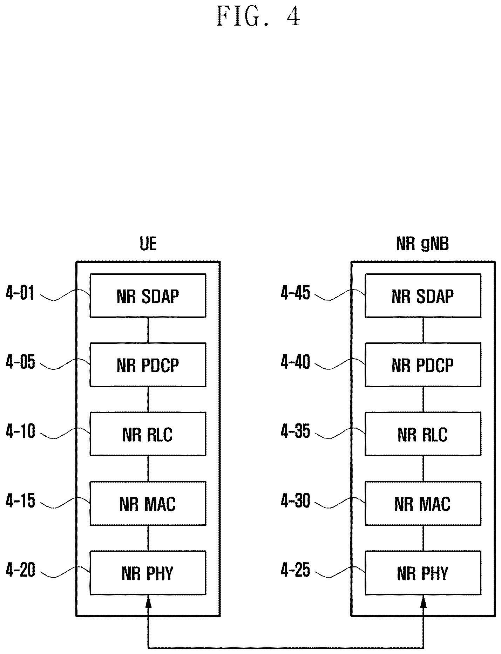

FIG. 4 is a diagram illustrating a radio protocol structure of a next-generation mobile communication system to which the disclosure may be applied.

Referring to FIG. 4, a radio protocol of the next-generation mobile communication system consists of an NR service data adaptation protocol (SDAP) 4-01 and 4-45, NR PDCP 4-05 and 4-40, NR RLC 4-10 and 4-35, and NR MAC 4-15 and 4-30 in a UE and an NR base station, respectively.

Main functions of the NR SDAPs 4-01 and 4-45 may include some of the following functions.
- Transfer of user plane data
- Mapping between a QoS flow and a DRB for both DL and UL
- Marking QoS flow ID in both DL and UL packets
- Reflective QoS flow to DRB mapping for the UL SDAP PDUs

With respect to the SDAP layer, the UE may be configured with a radio resource control (RRC) message whether to use a SDAP layer header or the function of the SDAP layer for each PDCP layer, for each bearer, or for each logical channel. In a case where the SDAP header is configured, the UE may instruct the UE to update or reconfigure mapping information for uplink and downlink QoS flows and data bearers with a non-access stratum (NAS) quality of service (QoS) reflected configuration 1-bit indicator (NAS reflective QoS) and an access stratum (AS) QoS reflected configuration 1-bit indicator (AS reflective QoS) of the SDAP header. The SDAP header may include QoS flow ID information indicating QoS. The SDAP header may include QoS flow ID information indicating QoS. The QoS information may be used as data processing priority, scheduling information, etc. to support a smooth service.

Main function of the NR PDCP 4-05 and 4-40 may include some of the following functions.
- Header compression and decompression (ROHC only)
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above description, the reordering function of the NR PDCP may refer to a function of reordering PDCP PDUs received from a lower layer in order based on a PDCP sequence number (SN). The reordering function of the NR PDCP may include a function to transmit data to the upper layer in the rearranged order or a function to directly transmit data without considering the order, a function to record lost PDCP PDUs by rearranging the order, a function to report the status of lost PDCP PDUs to the transmitting side, and a function to request retransmission for lost PDCP PDUs.

The main function of the NR RLC 4-10 and 4-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, the in-sequence delivery of the NR RLC may refer to a function of sequentially delivering RLC SDUs received from a lower layer to an upper layer. In a case where originally one RLC SDU is divided into several RLC SDUs and received, the in-sequence delivery of the NR RLC may include a function to reassemble and deliver divided RLC SDUs.

The in-sequence delivery of the NR RLC may include a function to rearrange received RLC PDUs based on RLC sequence number (SN) or PDCP sequence number (SN), a function to reorder and record lost RLC PDUs, a function to report the status of lost RLC PDUs to the transmitting side, and a function to request retransmission of lost RLC PDUs.

The in-sequence delivery of the NR RLC may include a function of sequentially delivering only the RLC SDUs before the lost RLC SDU to the upper layer when there is a missing RLC SDU.

The in-sequence delivery of the NR RLC may include a function of sequentially delivering all RLC SDUs received before the timer starts to the upper layer if a predetermined timer has expired even if there is a lost RLC SDU.

The in-sequence delivery of the NR RLC may include a function of sequentially delivering all RLC SDUs received so far to the upper layer if a predetermined timer has expired even if there is a lost RLC SDU.

The NR RLC may process the RLC PDUs in the order of reception and out-of-sequence of the serial number, and deliver the processed RLC PDUs to the NR PDCP. In a case where the NR RLC receives segments, segments stored in the buffer or to be received later may be received, reconstructed into one complete RLC PDU, and delivered to the NR PDCP.

The NR RLC layer may not include a concatenation function, and the function may be performed by the NR MAC layer or replaced with a multiplexing function of the NR MAC layer.

In the above description, the out-of-sequence delivery of the NR RLC device may refer to a function of directly delivering RLC SDUs received from a lower layer to an upper layer regardless of order. The out-of-sequence delivery of the NR RLC device may include a function of reassembling and delivering in a case where originally one RLC SDU is divided into several RLC SDUs and received. The out-of-sequence delivery of the NR RLC device may include a function of storing the RLC SN or PDCP SN of the received RLC PDUs, arranging the order, and recording the lost RLC PDUs.

The NR MACs 4-15 and 4-30 may be connected to several NR RLC layers configured in one UE, and the main function of the NR MAC may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 4-20 and 4-25 may channel-code and modulate upper layer data, make OFDM symbols and transmits the OFDM symbols through a radio channel, or may demodulate and channel-decode the OFDM symbols received through the radio channel and transmits them to upper layers.

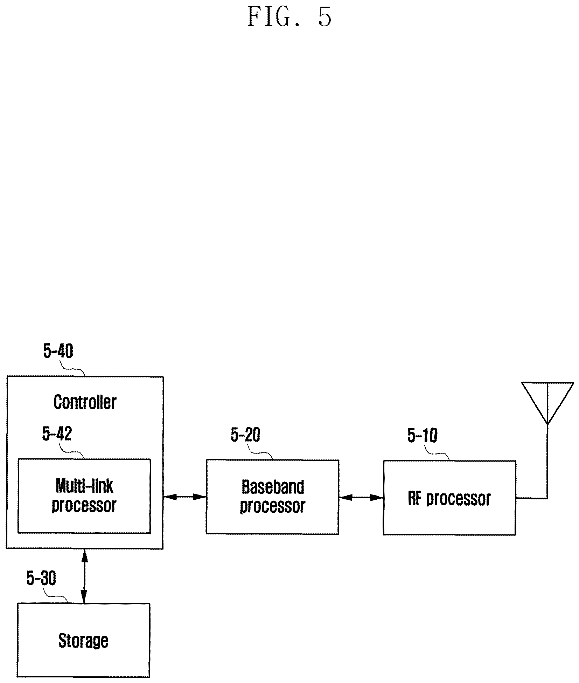

FIG. 5 is a diagram illustrating a UE apparatus according to embodiments of the disclosure.

Referring to the diagram, the UE may include a radio frequency (RF) processor 5-10, a baseband processor 5-20, a storage 5-30, and a controller 5-40.

The RF processor 5-10 may perform a function for transmitting and receiving a signal through a radio channel, such as band conversion and amplification of a signal. For example, the RF processor 5-10 may up-convert a baseband signal provided from the baseband processor 5-20 into an RF band signal, transmit the RF band signal through an antenna, and down-convert the RF band signal received through the antenna to the baseband signal. For example, the RF processor 5-10 may include a transmission filter, a reception filter, an amplifier, a mixer, an oscillator, a digital to analog converter (DAC), an analog to digital converter (ADC), etc. In the diagram, only one antenna is illustrated, but the UE may include a plurality of antennas. In addition, the RF processor 5-10 may include a plurality of RF chains. Furthermore, the RF processor 5-10 may perform beamforming. For the beamforming, the RF processor 5-10 may adjust the phase and magnitude of each of signals transmitted and received through a plurality of antennas or antenna elements. In addition, the RF processor may perform MIMO, and may receive multiple layers when performing MIMO operation.

The baseband processor 5-20 may perform a function of converting between a baseband signal and a bit stream according to a physical layer standard of the system. For example, when transmitting data, the baseband processor 5-20 may generate complex symbols by encoding and modulating a transmitted bit stream. In addition, when receiving data, the baseband processor 5-20 may restore a received bit stream by demodulating and decoding the baseband signal provided from the RF processor 5-10. For example, in the case of following an orthogonal frequency division multiplexing (OFDM) scheme, when transmitting data, the baseband processor 5-20 may generate complex symbols by encoding and modulating a transmitted bit stream, map the complex symbols to subcarriers, and then configure OFDM symbols through an inverse fast Fourier transform (IFFT) operation and cyclic prefix (CP) insertion. In addition, when receiving data, the baseband processor 5-20 may divide the baseband signal provided from the RF processor 5-10 into OFDM symbol units, restore signals mapped to subcarriers through a fast Fourier transform (FFT) operation, and then restore a received bit stream through demodulation and decoding. The baseband processor 5-20 and the RF processor 5-10 may transmit and receive signals as described above. Accordingly, the baseband processor 5-20 and the RF processor 5-10 may be referred to as a transmitter, a receiver, a transceiver, or a communicator. Furthermore, at least one of the baseband processor 5-20 and the RF processor 5-10 may include a plurality of communication modules to support a plurality of different radio access technologies. In addition, at least one of the baseband processor 5-20 and the RF processor 5-10 may include different communication modules to process signals of different frequency bands. For example, the different radio access technologies may include a wireless LAN (e.g., IEEE 802.11), a cellular network (e.g., LTE), or the like. In addition, the different frequency bands may include a super high frequency (SHF) (e.g., 2.NRHz, NRhz) band and a millimeter wave (e.g., 60 GHz) band.

The storage 5-30 may store data such as a basic program, an application program, and configuration information for the operation of the UE. In particular, the storage 5-30 may store information related to a second access node performing wireless communication by using the second radio access technology. In addition, the storage 5-30 may provide stored data according to the request of the controller 5-40. The controller 5-40 may control overall operations of the UE. For example, the controller 5-40 may transmit and receive signals through the baseband processor 5-20 and the RF processor 5-10. In addition, the controller 5-40 may write data in the storage 5-30 and read the data. To this end, the controller 5-40 may include at least one processor. For example, the controller 5-40 may include a communication processor (CP) that controls for communication and an application processor (AP) that controls an upper layer such as an application program.

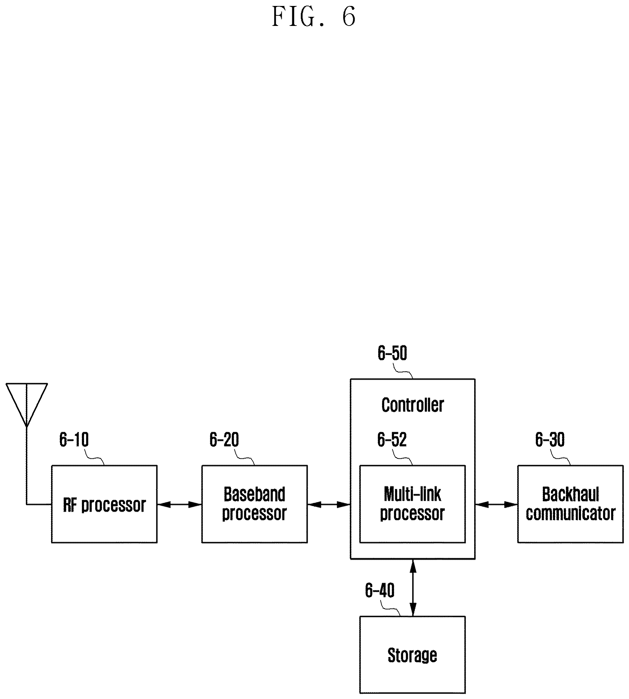

FIG. 6 is a diagram illustrating a base station apparatus according to embodiments of the disclosure.

As illustrated in the diagram, the base station may be configured including an RF processor 6-10, a baseband processor 6-20, a backhaul communicator 6-30, a storage 6-40, and a controller 6-50.

The RF processor 6-10 may perform a function for transmitting and receiving a signal through a radio channel, such as band conversion and amplification of the signal. For example, the RF processor 6-10 may up-convert the baseband signal provided from the baseband processor 6-20 into an RF band signal, transmit the same through an antenna, and down-convert the RF band signal received through the antenna into a baseband signal. For example, the RF processor 6-10 may include a transmission filter, a reception filter, an amplifier, a mixer, an oscillator, a DAC, an ADC, and the like. Although only one antenna is illustrated in the diagram, the first access node may include a plurality of antennas. In addition, the RF processor 6-10 may include a plurality of RF chains. Furthermore, the RF processor 6-10 may perform beamforming. For the beamforming, the RF processor 6-10 may adjust the phase and magnitude of each of signals transmitted and received through a plurality of antennas or antenna elements. The RF processor may perform a downlink MIMO operation by transmitting one or more layers.

The baseband processor 6-20 may perform a function of converting between a baseband signal and a bit stream according to the physical layer standard of the first radio access technology. For example, when transmitting data, the baseband processor 6-20 may generate complex symbols by encoding and modulating a transmitted bit stream. In addition, when receiving data, the baseband processor 6-20 may restore a received bit stream through demodulating and decoding the baseband signal provided from the RF processor 6-10. For example, in the case of following the OFDM scheme, when transmitting data, the baseband processor 6-20 may generate complex symbols by encoding and modulating a transmitted bit stream, map the complex symbols to subcarriers, and then configure OFDM symbols through IFFT operation and CP insertion. In addition, when receiving data, the baseband processor 6-20 may divide the baseband signal provided from the RF processor 6-10 into OFDM symbol units, restore signals mapped to subcarriers through FFT operation, and then restore a received bit stream through demodulation and decoding. The baseband processor 6-20 and the RF processor 6-10 may transmit and receive signals as described above. Accordingly, the baseband processor 6-20 and the RF processor unit 6-10 may be referred to as a transmitter, a receiver, a transceiver, a communicator, or a wireless communicator.

The backhaul communicator 6-30 may provide an interface for performing communication with other nodes in the network. For example, the backhaul communicator 6-30 may convert a bit stream transmitted from the main base station to another node, for example, an auxiliary base station, a core network, or the like, into a physical signal, and may convert a physical signal received from the other node into a bit stream.

The storage 6-40 may store data such as a basic program, an application program, and configuration information for the operation of the main base station. In particular, the storage 6-40 may store information on a bearer allocated to an accessed UE, a measurement result reported from the accessed UE, and the like. In addition, the storage 6-40 may store information serving as a criterion for determining whether to provide or stop multiple connections to the UE. In addition, the storage 6-40 may provide stored data according to the request of the controller 6-50.

The controller 6-50 may control overall operations of the main base station. For example, the controller 6-50 may transmit and receive signals through the baseband processor 6-20 and the RF processor 6-10 or through the backhaul communicator 6-30. In addition, the controller 6-50 may write data in the storage 6-40 and reads the data. To this end, the controller 6-50 may include at least one processor.

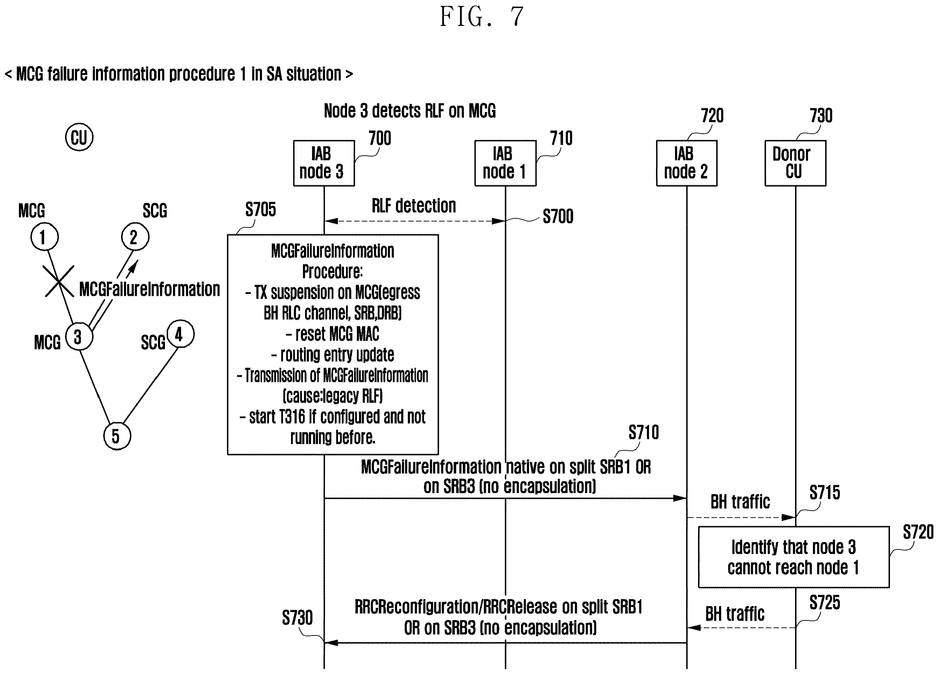

FIG. 7 is a diagram illustrating a case of master cell group failure (MCG failure) through RLF detection in a stand-alone (SA) situation.

In FIG. 7, it may be assumed that IAB nodes 1 and 2 are connected to a CU of a donor node through a relay link. Hereinafter, 'IAB node' or 'node' will be used interchangeably.

An IAB node 3 may have the node 1 as the parent node of an MCG link, and the node 2 as the parent node of a secondary cell group (SCG) link. In a case where a mobile terminal (MT) of the node 3 detects RLF of the MCG link, the operation of processing the RLF is illustrated. The case of RLF of the MCG link may include at least one of a case in which a T310 timer expires in the MT, a case in which maximum retransmission performed by the RLC layer is indicated, and a case in which a random access problem is indicated in the MAC. When the MT detects the RLF in the MCG link, the MT of the IAB node 3 may perform at least one of the following operations.
- Suspend transmission to the master cell group (MCG). In this case, the object for suspending transmission may be all signaling radio bearers (SRBs), data radio bearers (DRBs), and a backhaul RLC channel/egress backhaul RLC channel.
- Reset the MCG MAC. If there is an RLC SDU or PDU that has failed to transmit, it may be transmitted again to the SCG RLC stack without MAC reset.
- Update a routing entry of the IAB node. In this case, a specific operation may remove the routing entry having a failed MCG link as an egress link in the backhaul adaptation protocol (BAP) entity, and replace the failed MCG with an SCG link when the SCG is configured.
- The MCGFailureInformation message may be transmitted to the donor CU through the parent node using through SRB 3 or split SRB1. In this case, one of the T310 timer expiration, RLC maximum retransmission reaching, and random access channel (RACH) problem occurrence may be set as a cause value. In addition, the corresponding message may include a measurement result value of a serving cell existing at a frequency corresponding to the measurement object configured in the MCG and a measurement result of a neighboring cell. In addition, the measurement result of serving cells existing at a frequency corresponding to the measurement object configured in the SCG and the measurement result of a neighboring cell may be included. In addition, routing information used by the BAP layer at the time of failure may be included. The routing information may include an egress link and a next hop ID mapped to each routing ID, and may also include BH RLC channel mapping information used in this case.
- When transmitting the message, if PDCP duplication is configured, the MT does not change the primary path and transmits the message through split SRB1. If not, change the primary path. If the MT transmits the message through SRB3, the MT may transmit the message directly through SRB3 without encapsulating the message in the ULInformationTransfer-MRDC message. In this regard, the master node (MN) may deliver the RRCReconfiguration or RRCrelease message through the received SRB. Similarly, when received through SRB3, the RRC message may be directly transmitted without separately using a message that encapsulates a message for the MRDC, such as DLInformationTransfer-MRDC. Upon receiving this message, the MT applies the corresponding RRC message.
- In another embodiment, after the MT delivers the message to the network, the network may include a message transmitting the message to the MT portion of the parent node corresponding to the failed MCG link in addition to the RRC message (e.g., RRCReconfiguration / RRCrelease) to be applied to the MT. This message may also be an RRC reconfiguration or RRC release message. After receiving this message, for example, a set of RRC messages to be applied to the MT and RRC messages to be applied to the parent node of the MCG, from the network, the MT may separate the message to be applied to the parent node corresponding to the MCG link and deliver the same first before applying the RRC message needed for the MT. In this case, a control packet of the BAP layer may be used, or an uplink dedicated control channel (UL-DCCH) may be used. After delivering this message, the MT may apply the RRC message to be applied to itself. The MCG parent node may receive a message necessary for itself from the MT of the child node and then apply the MT of the node.
- Transmit the message above and start a timer. If the MT does not receive the RRC message until the timer expires, the MT may perform RRC re-establishment. According to an embodiment, the IAB node 3 700 may perform RLF detection of the IAB node 1 710 (S700). The IAB node 3 700 may perform an MCGFaliureInformation procedure (S705). The MCGFaliureInformation procedure may include at least one of the following operations.
- TX suspension on MCG (egress BH RLC channel, SRB, and DRB)
- Reset MCG MAC
- Routing entry update
- Transmission of MCGFaliureInformation (cause: legacy RLF)
- Start T316 if configured and not running before

The IAB node 3 700 may transmit the MCGFaliureInformation message to the IAB node 2 720 through split SRB1 or SRB3 (no encapsulation) (S710). The IAB node 2 720 may transmit the MCGFaliureInformation message to the donor CU 730 through BH traffic (S715). The donor CU 730 may identify that the node 3 700 cannot reach the node 1 710 (S720). For example, the Donor CU 730 may identify that the radio link between the node 3 700 and the node 1 710 is disconnected. The donor CU 730 may transmit an RRC message corresponding to the MCGFaliureInformation through BH traffic to the IAB node 2 720 (S725). The IAB node 2 720 may transmit RRCReconfiguration/RRCRelease on split SRB1 or SRB3 (no encapsulation) to the IAB node 3 700 (S730).

The RRCReconfiguration message transmitted in step S730 may include information for recovery in case of the IAB link failure. For example, the RRCReconfiguration message may include an IP address to be used after connection resumption in the DU part of the corresponding IAB node. In addition, the RRCRelease message may include a PCI (physical cell ID) included in the IAB node to be used for cell measurement and cell selection in IDLE mode. In a case where the IAB node 3 700 receives an IP address in the RRCReconfiguration message, the received IAB node 3 700 may use the corresponding IP address as an IP layer destination address of the DU without an additional IP address request operation after connection. Through this, the IAB node 3 700 may exchange the control signal and user plane signal of F1 in the IP layer with the CU and DU of the donor node. In a case where the IAB node 3 700 receives the PCI to be used for cell selection in the RRCRelease message, the received IAB node 3 700 may consider only the corresponding cell as a condition of a selectable cell or a suitable cell when selecting a cell in the IDLE mode.

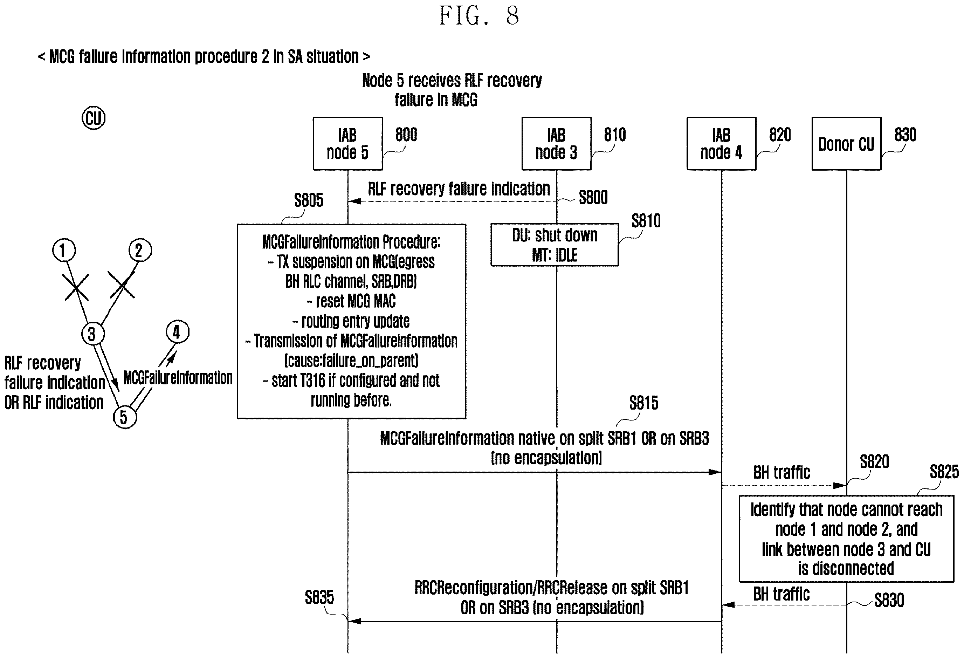

FIG. 8 is a diagram illustrating a case of MCG failure through RLF notification in an SA situation.

In FIG. 8, it may be assumed that IAB nodes 1 and 2 are connected to a CU of a donor node through a relay link.

An IAB node 3 has the node 1 as the parent node of an MCG link, and the node 2 as the parent node of an SCG link. The node 3 has node 5 as a child node and may serve the MCG link. Node 4 may serve the SCG link of the node 5. In a case where the mobile terminal (MT) of the node 3 detects the RLF of the MCG link, the node 3 may perform an RRC connection re-establishment operation. When this re-establishment fails, node 3 may deliver an RLF recovery failure notification to the child node. The MT of the child node that has received this notification may consider that RLF has occurred in the received link. In FIG. 8, because the node 3 is an MN in the node 5 which is the child node, the MT of the node 5 considers that the RLF has occurred in the MCG link.

For example, when an IAB node receives an RLF recovery failure notification from its parent node, it may consider that RLF has occurred in the corresponding link. Accordingly, when a notification is received from the MCG, the MCG failure information operation may be performed, and when a notification is received from the SCG, the SCG failure information operation may be performed. The MCG failure information may perform at least one of the following operations.
- Suspend transmission to the MCG. In this case, the object for suspending transmission may be all SRBs, DRBs, and a backhaul RLC channel/egress backhaul RLC channel.
- Reset the MCG MAC. If there is an RLC SDU or PDU that has failed to transmit, it may be transmitted again to the SCG RLC stack without MAC reset.
- Update a routing entry of the IAB node. In this case, a specific operation may remove the routing entry having a failed MCG link as an egress link in the BAP entity, and replace the failed MCG with an SCG link when the SCG is configured.
- The MCGFailureInformation message may be transmitted to the parent node of the SCG side through SRB 3 or split SRB1. In this case, the cause value may be set to a value indicating a state in which the parent node, for example, the MN, that has transmitted the notification has lost its connection with its parent node or network. Unlike the general RLF report, the corresponding message may not include a measurement result value of a serving cell existing at a frequency corresponding to the measurement object configured in the MCG and a measurement result of a neighboring cell. In addition, the measurement result of serving cells existing at a frequency corresponding to the measurement object configured in the SCG and the measurement result of a neighboring cell may not be included. Routing information used by the BAP layer at the time of failure may be included. In this case, the routing information may include an egress link and a next hop ID mapped to each routing ID, and may also include BH RLC channel mapping information used in this case.
- When transmitting the message, if PDCP duplication is configured, the MT does not change the primary path and transmits the message through split SRB1. If not, change the primary path. If the MT transmits the message through SRB3, the MT may transmit the message directly through SRB3 without encapsulating the message in the ULInformationTransfer-MRDC message. In this regard, the master node (MN) may deliver the RRCReconfiguration or RRCrelease message through the received SRB. Similarly, when received through SRB3, the RRC message may be directly transmitted without separately using a message that encapsulates a message for the MRDC, such as DLInformationTransfer-MRDC. Upon receiving this message, the MT applies the corresponding RRC message.
- In another embodiment, after the MT delivers the message to the network, the network may include a message transmitting the message to the MT portion of the parent node corresponding to the failed MCG link in addition to the RRC message (e.g., RRCReconfiguration / RRCrelease) to be applied to the MT. This message may also be an RRC reconfiguration or RRC release message. After receiving this message, for example, a set of RRC messages to be applied to the MT and RRC messages to be applied to the parent node of the MCG, from the network, the MT may separate the message to be applied to the parent node corresponding to the MCG link and deliver the same first before applying the RRC message needed for the MT. In this case, a control packet of the BAP layer may be used, or an uplink dedicated control channel (UL-DCCH) may be used. After delivering this message, the MT may apply the RRC message to be applied to itself. The MCG parent node may receive a message necessary for itself from the MT of the child node and then apply the MT of the node.
- Transmit the message above and start a timer. If the MT does not receive the RRC message until the timer expires, the MT may perform RRC re-establishment. According to an embodiment, if an IAB node 3 810 fails RRC re-establishment, an IAB node 5 800 may receive an RLF recovery failure indication from the IAB node 3 810 (S800). The IAB node 5 800 may perform an MCGFaliureInformation procedure (S805). The MCGFaliureInformation procedure may include at least one of the following operations.
- TX suspension on MCG (egress BH RLC channel, SRB, and DRB)
- Reset MCG MAC
- Routing entry update
- Transmission of MCGFaliureInformation (cause: failure_on_parent)
- Start T316 if configured and not running before

In a case where the RRC re-establishment fails, the IAB node 3 810 may, after transmitting the RLF recovery failure indication, shut down in the case of DU, and may switch to the IDLE mode in the case of MT (S810). The shutdown may mean stopping all signal transmission and stopping UL/DL transmission and reception. The IAB node 5 800 may transmit the MCGFaliureInformation message to the IAB node 4 820 through split SRB1 or SRB3 (no encapsulation) (S815). The IAB node 4 820 may transmit BH traffic including the MCGFaliureInformation message to a donor CU 830 (S820). The donor CU 830 may identify that the node 3 810 cannot reach the node 1 and the node 2, and may identify that a link between the node 3 and CU is disconnected (S825). The donor CU 830 may transmit BH traffic to the IAB node 4 820 (S830). The IAB node 4 820 may transmit RRCReconfiguration/RRCRelease message through split SRB1 or SRB3 (no encapsulation) to the IAB node 5 800 (S835).

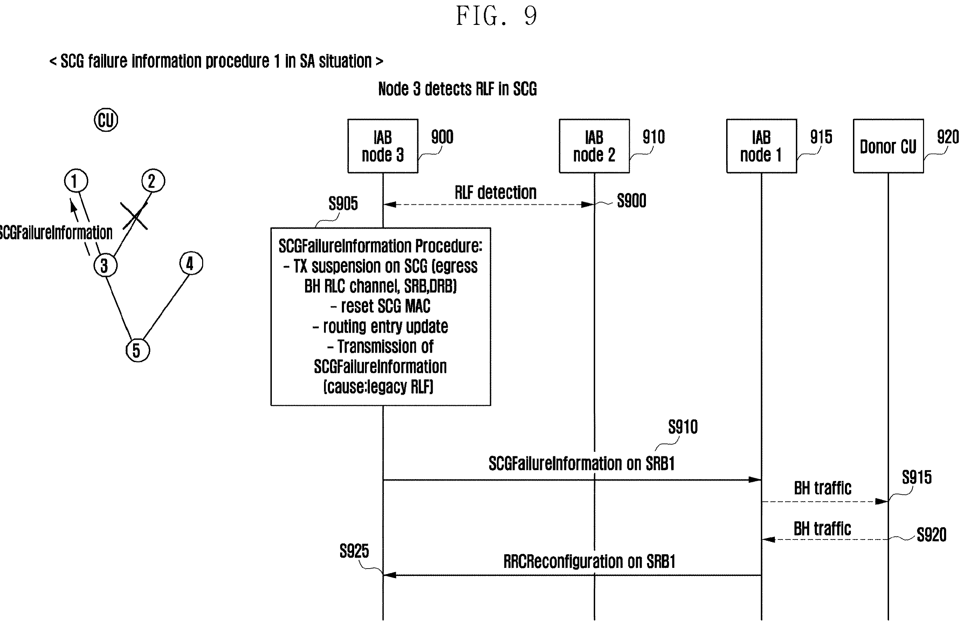

The RRCReconfiguration message transmitted in step S835 may include information for recovery in case of the IAB link failure. For example, the RRCReconfiguration message may include an IP address to be used after connection resumption in the DU part of the corresponding IAB node. In addition, the RRCRelease message may include a PCI (physical cell ID) included in the IAB node to be used for cell measurement and cell selection in IDLE mode. In a case where the IAB node 5 800 receives an IP address in the RRCReconfiguration message, the received IAB node 5 800 may use the corresponding IP address as an IP layer destination address of the DU without an additional IP address request operation after resuming the connection. Through this, the IAB node 5 800 may exchange the control signal and user plane signal of F1 in the IP layer with the CU and DU of the donor node. In a case where the IAB node 5 800 receives the PCI to be used for cell selection in the RRCRelease message, the received IAB node 5 800 may consider only the corresponding cell as a condition of a selectable cell or a suitable cell when selecting a cell in the IDLE mode. FIG. 9 is a diagram illustrating a case of SCG failure through RLF detection in an SA situation.

In FIG. 9, it may be assumed that IAB nodes 1 and 2 are connected to a CU of a donor node through a relay link.

An IAB node 3 has the node 1 as the parent node of an MCG link, and the node 2 as the parent node of an SCG link. The node 3 has node 5 as a child node and may serve the MCG link. Node 4 may serve the SCG link of the node 5. In a case where the mobile terminal (MT) of the node 3 detects the RLF of the SCG link, the node 3 may perform an SCG failure information operation. The SCG failure information may perform at least one of the following operations.
- Suspend transmission to the SCG. In this case, the object for suspending transmission may be all SRBs, DRBs, and a backhaul RLC channel/egress backhaul RLC channel.
- Reset the SCG MAC. If there is an RLC SDU or PDU that has failed to transmit, it may be transmitted again to the MCG RLC stack without MAC reset.

- Update a routing entry of the IAB node. In this case, a specific operation may remove the routing entry having a failed SCG link as an egress link in the BAP entity, and replace the failed SCG with an MCG link.
- The SCGFailureInformation message may be transmitted to the donor CU through the parent node through SRB1. In this case, the cause value may be a cause value of a general RLF such as the T310 timer expiration, RLC maximum retransmission reaching, and RACH problem occurrence. The corresponding message may include a measurement result value of a serving cell existing at a frequency corresponding to the measurement object configured in the SCG and a measurement result of a neighboring cell, and the measurement result of serving cells existing at a frequency corresponding to the measurement object configured in the SCG and the measurement result of a neighboring cell. Routing information used by the BAP layer at the time of failure may be included. In this case, the routing information may include an egress link and a next hop ID mapped to each routing ID, and may also include BH RLC channel mapping information used in this case.

According to an embodiment, the IAB node 3 900 may perform RLF detection of the IAB node 2 910 (S900). The IAB node 3 900 may perform an SCGFaliureInformation procedure (S905). The SCGFaliureInformation procedure may include at least one of the following operations.
- TX suspension on SCG (egress BH RLC channel, SRB, and DRB)
- Reset SCG MAC
- Routing entry update
- Transmission of SCGFaliureInformation (cause: legacy RLF)

The IAB node 3 900 may transmit the SCGFaliureInformation message to the IAB node 1 915 through SRB1 (S910). The IAB node 1 915 may transmit BH traffic to the donor CU 920 (S915). The donor CU 920 may transmit BH traffic to the IAB node 1 915 (S920). The IAB node 1 915 may transmit the RRCReconfiguration message to the IAB node 3 900 through SRB1 (S925).

The RRCReconfiguration message transmitted in step S925 may include information for recovery in case of the IAB link failure. For example, the RRCReconfiguration message may include an IP address to be used after connection resumption in the DU part of the corresponding IAB node. In a case where the IAB node 3 900 receives an IP address in the RRCReconfiguration message, the received IAB node 3 900 may use the corresponding IP address as an IP layer destination address of the DU without an additional IP address request operation after resuming the connection. Through this, the IAB node 3 900 may exchange the control signal and user plane signal of F1 in the IP layer with the CU and DU of the donor node.

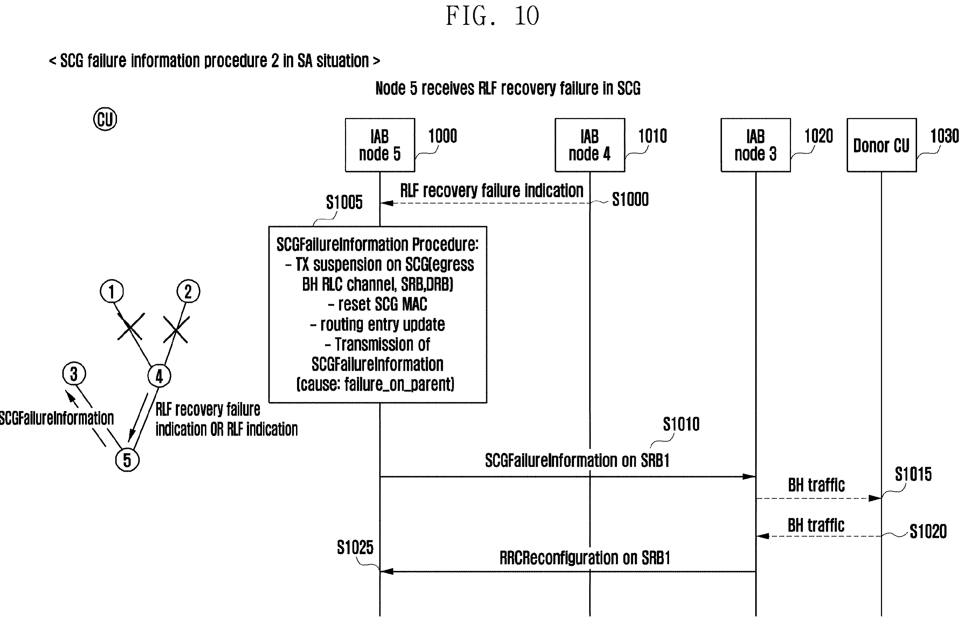

FIG. 10 is a diagram illustrating a case of SCG failure through RLF notification in an SA situation.

In FIG. 10, it may be assumed that IAB nodes 1 and 2 are connected to a CU of a donor node through a relay link.

An IAB node 4 has the node 1 as the parent node of an MCG link, and the node 2 as the parent node of an SCG link. The node 4 has node 5 as a child node and may serve the SCG link. Node 3 may serve the MCG link of the node 5. When the node 4 fails re-establishment, RLF recovery failure notification may be delivered to the child node. The MT of the child node that has received this notification may consider that RLF has occurred in the received link. When the node 5 receives the RLF recovery failure notification from the node 4 of the SCG link, the node 5 may perform the SCG failure information operation. The SCG failure information may perform at least one of the following operations.
- Suspend transmission to the SCG. In this case, the object for suspending transmission may be all SRBs, DRBs, and a backhaul RLC channel/egress backhaul RLC channel.
- Reset the SCG MAC. If there is an RLC SDU or PDU that has failed to transmit, it may be transmitted again to the MCG RLC stack without MAC reset.
- Update a routing entry of the IAB node. In this case, a specific operation may remove the routing entry having a failed SCG link as an egress link in the BAP entity, and replace the failed SCG with an MCG link.
- The SCGFailureInformation message may be transmitted to the parent node of the MCG link through SRB1. In this case, the cause value may be set to a value indicating a state in which the parent node, for example, the SN, that has transmitted the notification has lost its connection with its parent node or network. The corresponding message may not include a measurement result value of a serving cell existing at a frequency corresponding to the measurement object configured in the SCG and a measurement result of a neighboring cell, and the measurement result of serving cells existing at a frequency corresponding to a measurement object configured in the MCG and the measurement result of a neighboring cell. Instead, routing information used by the BAP layer at the time of failure may be included. In this case, the routing information may include an egress link and a next hop ID mapped to each routing ID, and may also include BH RLC channel mapping information used in this case.

According to an embodiment, an IAB node 5 1000 may receive an RLF recovery failure indication from an IAB node 4 1010 (S1000). The IAB node 5 1000 may perform an SCGFaliureInformation procedure (S1005). The SCGFaliureInformation procedure may include at least one of the following operations.
- TX suspension on SCG (egress BH RLC channel, SRB, and DRB)
- Reset SCG MAC
- Routing entry update
- Transmission of SCGFaliureInformation (cause: failure_on_parent)

The IAB node 5 1000 may transmit the SCGFaliureInformation message to an IAB node 3 1020 through SRB1 (S1010). The IAB node 3 1020 may transmit BH traffic to a donor CU 1030 (S1015). The donor CU 1030 may transmit BH traffic to the IAB node 3 1020 (S1020). The IAB node 3 1020 may transmit the RRCReconfiguration message to the IAB node 5 1000 through SRB1 (S1025).

The RRCReconfiguration message transmitted in step S1025 may include information for recovery in case of the IAB link failure. For example, the RRCReconfiguration message may include an IP address to be used after connection resumption in the DU part of the corresponding IAB node. In a case where the IAB node 5 1000 receives an IP address in the RRCReconfiguration message, the received IAB node 5 1000 may use the corresponding IP address as an IP layer destination address of the DU without an additional IP address request operation after resuming the connection. Through this, the IAB node 5 1000 may exchange the control signal and user plane signal of F1 in the IP layer with the CU and DU of the donor node.

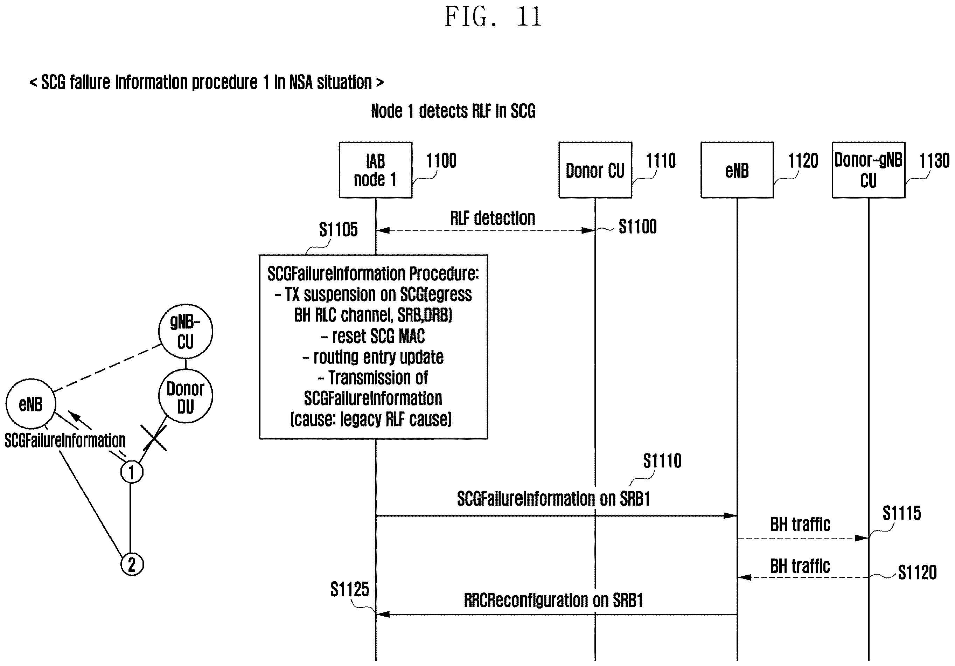

FIG. 11 is a diagram illustrating a case of SCG failure through RLF detection in a non-standalone (NSA) situation.

In FIG. 11, IAB nodes 1 and 2 are ENDC situations in which an MN is connected to an MCG link using LTE RAT as eNB and a SN is connected to a SCG link using NR RAT as donor gNB. In this case, when RLF is detected in the SCG link, the MT of the IAB node may perform the SCG failure information operation.

The SCG failure information may perform at least one of the following operations.
- Suspend transmission to the SCG. In this case, the object for suspending transmission may be all SRBs, DRBs, and a backhaul RLC channel/egress backhaul RLC channel.
- Reset the SCG MAC. If there is an RLC SDU or PDU that has failed to transmit, it may be transmitted again to the MCG RLC stack without MAC reset.
- Update a routing entry of the IAB node. In this case, a specific operation may remove the routing entry having a failed SCG link as an egress link in the BAP entity, and replace the failed SCG with an MCG link.
- The SCGFailureInformation message may be transmitted to the parent node of the MCG link through SRB1. In this case, the cause value may be occurrence factors of general RLF detection, for example, T310 timer expiration, RLC maximum retransmission reaching, RACH problem occurrence, and the like. The corresponding message may include a measurement result value of a serving cell existing at a frequency corresponding to the measurement object configured in the SCG and a measurement result of a neighboring cell, and a measurement result of serving cells existing at a frequency corresponding to the measurement object configured in the MCG and the measurement result of a neighboring cell. Routing information used by the BAP layer at the time of failure may be included. In this case, the routing information may include an egress link and a next hop ID mapped to each routing ID, and may also include BH RLC channel mapping information used in this case.

According to an embodiment, an IAB node 1 1100 may perform RLF detection of a doner CU 1110 (S1100). The IAB node 1 1100 may perform an SCGFaliureInformation procedure (S1105). The SCGFaliureInformation procedure may include at least one of the following operations.
- TX suspension on SCG (egress BH RLC channel, SRB, and DRB)
- Reset SCG MAC
- Routing entry update
- Transmission of SCGFaliureInformation (cause: legacy RLF cause)

The IAB node 1 1100 may transmit the SCGFaliureInformation message to an eNB 1120 through SRB1 (S1110). The eNB 1120 may transmit BH traffic to a donor-gNB CU 1130 (S1115). The donor-gNB CU 1130 may transmit BH traffic to the eNB 1120 (S1120). The eNB 1120 may transmit the RRCReconfiguration message to the IAB node 1 1100 through SRB1 (S1125).

The RRCReconfiguration message transmitted in step S1125 may include information for recovery in case of the IAB link failure. For example, the RRCReconfiguration message may include an IP address to be used after connection resumption in the DU part of the corresponding IAB node. In a case where the IAB node 1 1100 receives an IP address in the RRCReconfiguration message, the received IAB node 1 1100 may use the corresponding IP address as an IP layer destination address of the DU without an additional IP address request operation after resuming the connection. Through this, the IAB node 1 1100 may exchange the control signal and user plane signal of F1 in the IP layer with the CU and DU of the donor node.

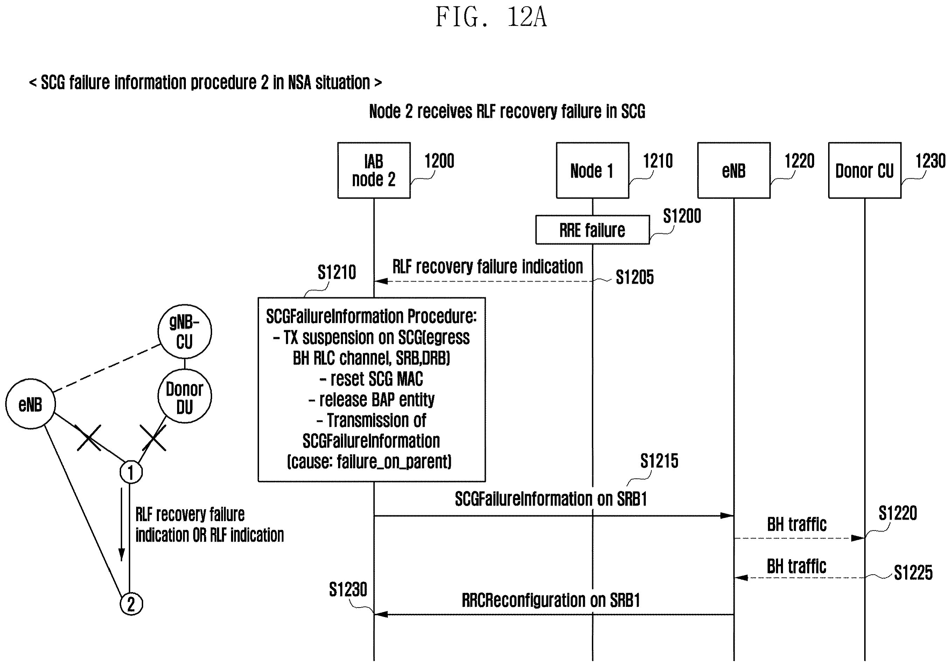

FIG. 12A is a diagram illustrating a case of SCG failure through RLF notification in an NSA situation.

In FIG. 12A, IAB nodes 1 and 2 are ENDC situations in which an MN is connected to an MCG link using LTE RAT as eNB and a SN is connected to a SCG link using NR RAT as donor gNB. In this case, when RLF is detected in the MCG link or MCG failure recovery fails, RRC connection re-establishment may be performed, and if this re-establishment fails, the IAB node may deliver an RLF recovery failure notification to a child node. The child node receiving this notification may perform the SCG failure information operation in the MT.

The SCG failure information may perform at least one of the following operations.
- Suspend transmission to the SCG. In this case, the object for suspending transmission may be all SRBs, DRBs, and a backhaul RLC channel/egress backhaul RLC channel.
- Reset the SCG MAC. If there is an RLC SDU or PDU that has failed to transmit, it may be transmitted again to the MCG RLC stack without MAC reset.
- Update a routing entry of the IAB node. In this case, a specific operation may remove the routing entry having a failed SCG link as an egress link in the BAP entity, and replace the failed SCG with an MCG link.
- The SCGFailureInformation message may be transmitted to the parent node of the MCG link through SRB1. In this case, the cause value may be set to a value indicating a state in which the parent node, for example, the SN, that has transmitted the notification has lost its connection with its parent node or network. The corresponding message may not include a measurement result value of a serving cell existing at a frequency corresponding to the measurement object configured in the SCG and a measurement result of a neighboring cell, and the measurement result of serving cells existing at a frequency corresponding to a measurement object configured in the MCG and the measurement result of a neighboring cell. Routing information used by the BAP layer at the time of failure may be included. In this case, the routing information may include an egress link and a next hop ID mapped to each routing ID, and may also include BH RLC channel mapping information used in this case.

According to an embodiment, there may be an RRE failure in node 1 1210 (S1200). The node 1 1210 may transmit an RLF recovery failure indication to IAB node 2 1200 (S1205). The IAB node 2 1200 may perform the SCGFailureInformation procedure (S1210). The SCGFaliureInformation procedure may include at least one of the following operations.
- TX suspension on SCG (egress BH RLC channel, SRB, and DRB)
- Reset SCG MAC
- Release entry update
- Transmission of SCGFaliureInformation (cause: failure _on_parent)

The IAB node 2 1200 may transmit the SCGFaliureInformation message to an eNB 1220 through SRB1 (S1215). The eNB 1220 may transmit BH traffic to a donor CU 1230 (S1220). The donor CU 1230 may transmit BH traffic to the eNB 1220 (S1225). The eNB 1120 may transmit the RRCReconfiguration message to the IAB node 2 1200 through SRB1 (S1230).

The RRCReconfiguration message transmitted in step S1230 may include information for recovery in case of the IAB link failure. For example, the RRCReconfiguration message may include an IP address to be used after connection resumption in the DU part of the corresponding IAB node. In a case where the IAB node 2 1200 receives an IP address in the RRCReconfiguration message, the received IAB node 2 1200 may use the corresponding IP address as an IP layer destination address of the DU without an additional IP address request operation after resuming the connection. Through this, the IAB node 2 1200 may exchange the control signal and user plane signal of F1 in the IP layer with the CU and DU of the donor node.

In another embodiment, after the IAB node transmits the SCGFailureInformation to the MN, a separate timer may be operated. If the MT does not receive the NR RRC message during the timer operation, the IAB node may perform an RRC re-establishment operation.

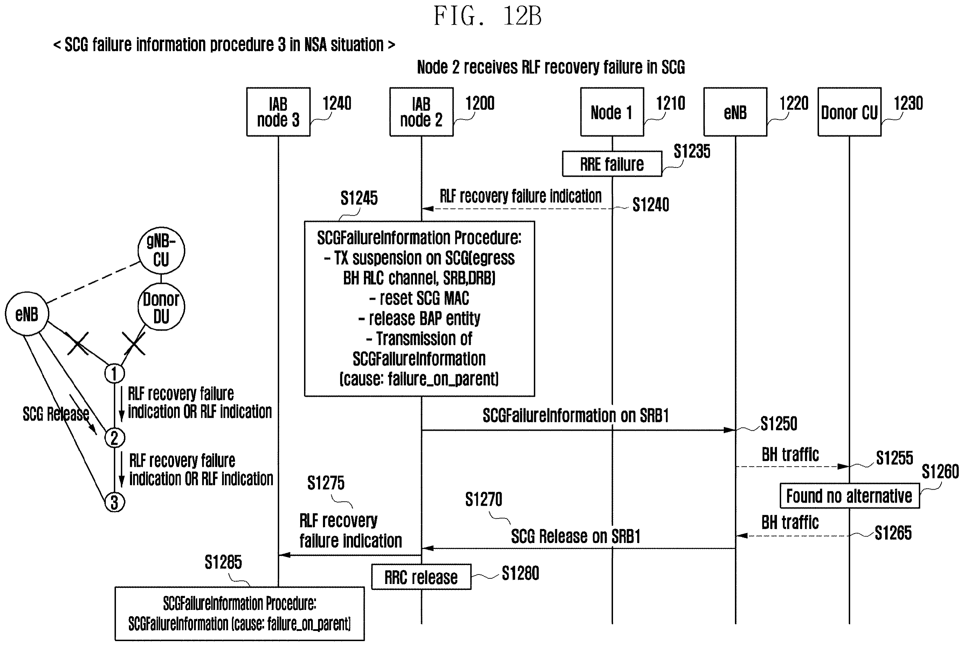

FIG. 12B is a diagram illustrating a case in which RLF recovery failure notification due to SCG release is transmitted.

As the MT transmits SCGFailureInformation to the MN and requests SCG release from the donor gNB, when the MN requests NR SCG release, the MT that has received the message may deliver an RLF recovery failure notification to the child node before releasing the SCG. The child node that has received this notification may perform the SCG failure information operation again. In this case, the cause value may also be a value due to the absence of network connection of the parent node corresponding to the SN. The SCG failure information may include cell measurement values of the MO configured in the SN measured by the MT and cell measurement values of the MO configured in the MN In this case, as another embodiment, upon receiving the RLF recovery failure notification, the IAB node may perform handover to a previously defined target cell. Before performing handover, the gNB CU may signal a specific target cell candidate group to the IAB node through RRCReconfiguration. This signal may include conditions for performing handover to the corresponding candidate target cell and configuration information to be used in the corresponding target cell.

According to an embodiment, there may be an RRE failure in node 1 1210 (S1235). The node 1 1210 may transmit an RLF recovery failure indication to IAB node 2 1200 (S1240). The IAB node 2 1200 may perform the SCGFailureInformation procedure (S1245). The SCGFaliureInformation procedure may include at least one of the following operations.
- TX suspension on SCG (egress BH RLC channel, SRB, and DRB)
- Reset SCG MAC
- Release BAP entity
- Transmission of SCGFaliureInformation (cause: failure_on_parent)

The IAB node 2 1200 may transmit the SCGFaliureInformation message to an eNB 1220 through SRB1 (S1250). The eNB 1220 may transmit BH traffic to a donor CU 1230 (S1255). It may be a found no alternative case in the donor CU 1230 (S1260). The donor CU 1230 may transmit BH traffic to the eNB 1220 (S1265). The eNB 1120 may transmit the SCG Release message to the IAB node 2 1200 through SRB 1 (S1270). The IAB node 2 1200 may transmit the RLF recovery failure indication to an IAB node 3 1240 (S1275). The IAB node 2 1200 may perform RRC release (S1280). The IAB node 3 1240 may perform the SCGFailureInformation procedure (S1285). For example, it may be SCGFailureInformation (cause: failure_on_parent).

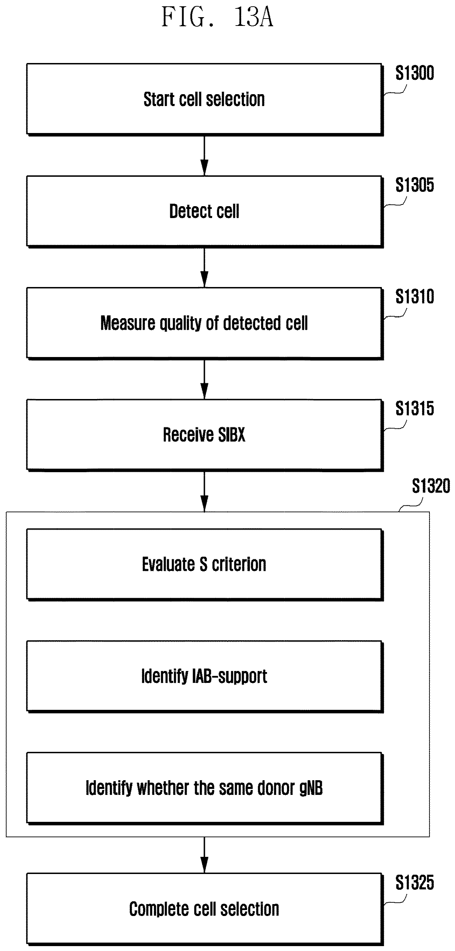

FIG. 13A is a flowchart illustrating a cell selection operation for a mobile terminal (MT) to access an IAB node included in the same donor gNB during connection re-establishment.

Once an IAB node performs a re-estimation for some reason, a cell selection process may first need to be performed. When selecting a cell, cell information belonging to the corresponding IAB node is delivered to the IAB MT to select an IAB node connected to the same donor gNB or CU as the donor gNB or CU accessed in the previous connection state.

Specifically, the delivered information may be a gNB ID, a donor CU ID of donor gNB, list information of physical cell ID (PCI), or cell global ID (CGI) of cells currently connected to the corresponding gNB and CU.

The method of delivery may vary depending on the information being delivered. As a method of delivery, when configured in an IAB network as an IAB MT, upon initial access, the gNB ID of the corresponding donor gNB, CU ID, or PCI or CGI information of cells currently connected to the CU may be transmitted from the donor CU through an RRC reconfiguration or RRCsetup message. If gNB ID/CU ID is given to the IAB, DUs of all IAB nodes currently connected to the donor gNB may broadcast the current donor gNB ID/CU ID as SIB information. In this case, when selecting a cell, if the MT obtains a corresponding SIB, and compares the gNB/CU ID stored therein with the ID being broadcasted, the cell selection may be continued. In another case, if the MT is also configured in the IAB network, a list of cells may be received from the donor CU with an RRC reconfiguration or RRCsetup message on initial access. In this case, when the MT performs cell search or detection for reselection, the PCI existing in the corresponding list may be preferentially selected based on the PCI value. Thereafter, the final selection may be completed by additionally determining whether it is suitable by using the existing cell selection metric.

According to an embodiment, in a case where the MT obtains the ID of the donor gNB or donor CU from the network, cell detection may be performed (S1305) while starting cell selection (S1300). The MT may measure the quality of the detected cell (S310). For example, the cell quality may be measured through SSB. Thereafter, it is possible to read SIB 1 to obtain a factor value required for selection. At the same time, donor gNB/CU ID existing in SIB X read additionally in SIB 1 or thereafter may be acquired (S1315). It is possible to determine whether the cell selection criterion of the cell is satisfied with the obtained information, whether the cell has an IAB-support indicator, and whether the cell is the same node as the donor gNB/CU that has been previously accessed (S1320). If all are satisfied, the MT may complete the selection of the corresponding cell (S1325).

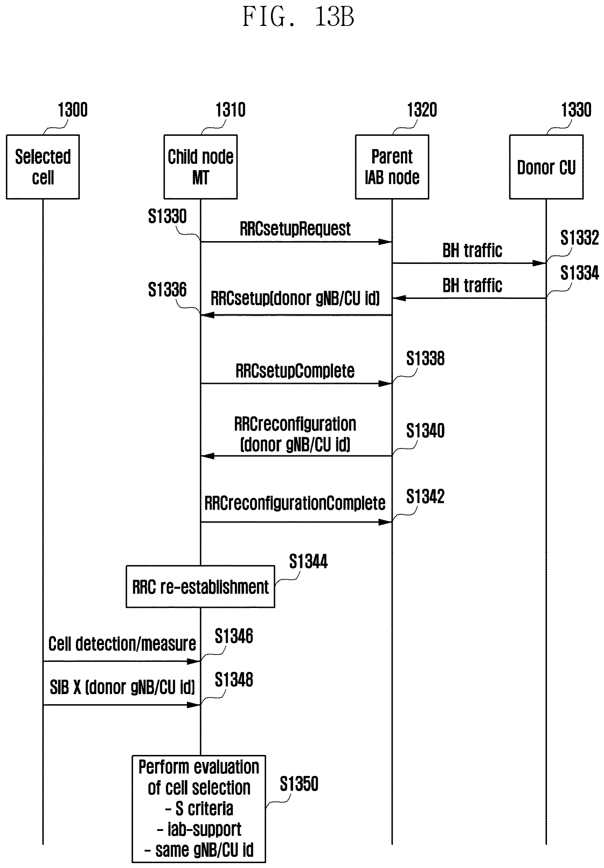

FIG. 13B is a diagram illustrating a case in which an MT receives an indicator related to a current donor gNB/CU through an RRC message when combining an IAB network.

In FIG. 13B, the MT may receive an indicator related to the current donor gNB/CU through an RRC message when combining the IAB network, may detect the cell and receive the gNB/CU ID in the SIB when performing re-establishment later, and may perform cell selection with the corresponding IAB node if the gNB/CU ID is the same gNB/CU ID as previously accessed, and if the remaining suitability criteria and IAB support are satisfied in a cell suitability evaluation.

According to an embodiment, a child node MT 1310 may transmit an RRCsetupRequest to a parent IAB node 1320 (S1330). The parent IAB node 1320 may transmit BH traffic including the RRCsetupRequest message to a donor CU 1330 (S1332). The donor CU 1330 may transmit BH traffic including the RRC message in response to the RRCsetupRequest message to the parent IAB node 1320 (S1334). The parent IAB node 1320 may transmit the RRCsetup message to the child node MT 1310 including the donor gNB/CU ID (S1336). The child node MT 1310 may transmit RRCsetupComplete to the parent IAB node 1320 (S1338). Alternatively, the parent IAB node 1320 may transmit the donor gNB/CU ID to the child node MT 1310 including the donor gNB/CU ID in the RRCreconfiguration message (S1340). In response to the RRCreconfiguration message, the child node MT 1310 may transmit RRCreconfigurationComplete to the parent IAB node 1320 (S1342). Thereafter, the child node MT 1310 may perform RRC re-establishment (S1344). The child node MT 1310 may perform cell detection/measure (S1346) and receive SIB X including the donor gNB/CU ID from the selected cell 1300 (S1348). The child node MT 1310 may perform evaluation of cell selection (S1350). The evaluation of cell selection may be performed by using at least one of the following included in the received SIB X.
- Evaluate S criteria by using S criteria
- Evaluate IAB support using an IAB-support indication
- Evaluate whether the selected cell corresponds to the same gNB/CU by using gNB/CU ID

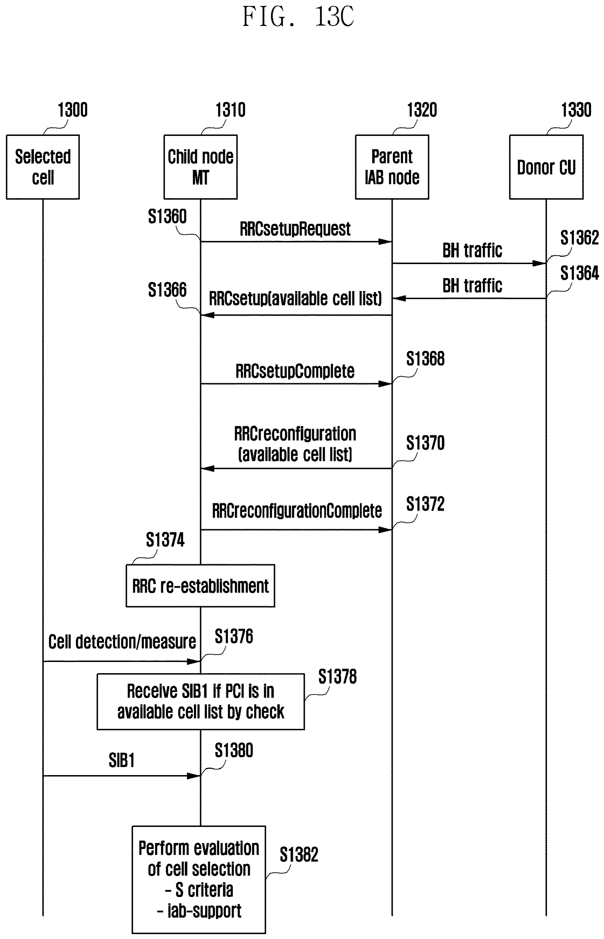

FIG. 13C is a diagram illustrating a case in which an MT receives information on cell IDs that are currently accessible under the donor gNB/CU through an RRC message when combining an IAB network.

In FIG. 13C, the MT may receive cell IDs (e.g., PCI and CGI) information accessible under the current donor gNB/CU through an RRC message when combining the IAB network, may receive the SIB1 if the cell detected corresponds to the received accessible cells when performing re-establishment later, and may perform cell selection with the corresponding IAB node if the remaining suitability criteria and IAB support are satisfied.

When the donor gNB/CU ID or possible cell ID is included in the RRC release message or RRCrelease with suspend, and the MT enters the inactive or idle state, the same operation may be performed during cell selection and reselection. For example, a suitability condition may be used when selecting/reselecting a cell. According to an embodiment, a child node MT 1310 may transmit an RRCsetupRequest to a parent IAB node 1320 (S1360). The parent IAB node 1320 may transmit BH traffic including the RRCsetupRequest message to a donor CU 1330 (S1362). The donor CU 1330 may transmit RRC message corresponding to the RRCsetupRequest message through BH traffic to the parent IAB node 1320 (S1364). The parent IAB node 1320 may transmit the RRCsetup message including available cell list to the child node MT 1310 (S1366). The child node MT 1310 may transmit RRCsetupComplete to the parent IAB node 1320 (S1368). The parent IAB node 1320 may transmit the RRCreconfiguration message including the available cell list to the child node MT 1310 (S1370). The child node MT 1310 may transmit RRCreconfigurationComplete to the parent IAB node 1320 (S1372). Thereafter, the child node MT 1310 may perform RRC re-establishment (S1374). The child node MT 1310 may perform cell detection/measure (S1376), and check PCI, if PCI is in available cell list, further receive SIB1 may be performed by receiving the SSB of the detected cell (S1378). In a case where PCI is included in the list, the child node MT 1310 may receive SIB 1 from the selected cell 1300 (S1380). The child node MT 1310 may perform evaluation of cell selection (S1382). The evaluation of cell selection may be performed by using at least one of the following.
- S criteria
- IAB-support

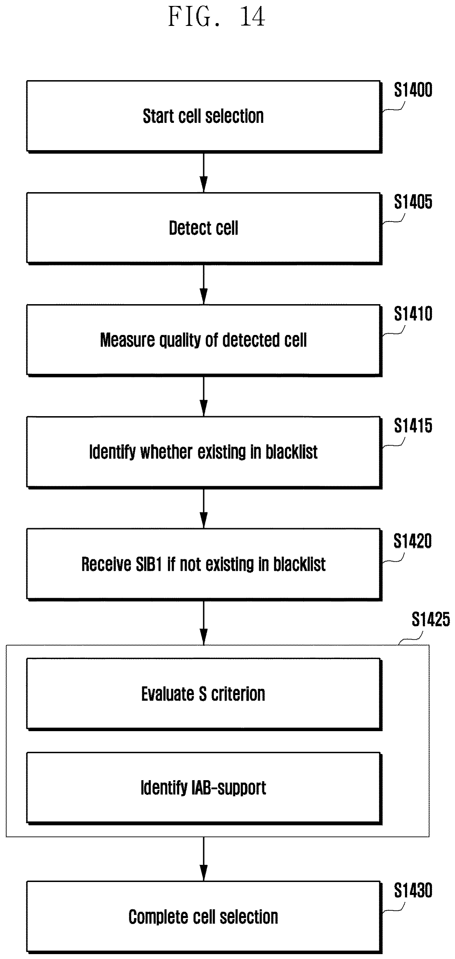

FIG. 14 is a flowchart illustrating a cell selection operation for an MT not to access its own lower IAB node during connection re-establishment.

FIG. 14 is an operation for the MT not to perform cell selection to a cell of its own lower IAB node during re-establishment. In this case, the MT may receive cell information of its own lower IAB nodes from the donor CU. When receiving corresponding cell information through an RRC setup or RRC reconfiguration message upon initial access and the MT performs cell selection (S1400), cell detection may be performed (S1405). The MT may measure the quality of detected cells. For example, the SSB may be measured (S1410). From the time point when PCI may be identified, it may be determined whether the corresponding cell is a cell in a blacklist or not. For example, the blacklist may be checked at the corresponding frequency (1415). If it is a cell that exists in the blacklist, the cell may be excluded from cell selection, another cell may be detect, and cell selection may be performed. If it is a cell that does not exist in the blacklist, the rest of the cell suitability check may be performed. For example, the MT may receive SIB 1 (S1420). The cell suitability check may, for example, determine whether the S criterion is satisfied or whether there is an IAB-support indicator (S1425). If both conditions are satisfied, the MT may complete the selection of the corresponding cell (S1430).

The corresponding available cell list may be included in the RRC setup/reconfiguration message as well as the RRCrelease message. Accordingly, when the MT goes to the idle mode or operates in the inactive mode, it may be determined whether the cell is included in the black list during cell selection and reselection, and may be excluded from selection.

The embodiments of the disclosure described and shown in the specification and the drawings are merely specific examples that have been presented to easily explain the technical contents of the disclosure and help understanding of the disclosure, and are not intended to limit the scope of the disclosure. It will be apparent to those skilled in the art that, in addition to the embodiments disclosed herein, other variants based on the technical idea of the disclosure may be implemented.

## Claims

1. A method of a third integrated access and backhaul (IAB) node in a wireless communication system, the method comprising:
receiving, from a first IAB node related to a first cell group of the third IAB node, a backhaul RLF indicator related to a recovery failure of a radio link failure (RLF) for a backhaul of the first IAB node;
determining that an RLF for the first cell group is detected based on the backhaul RLF indicator; and
transmitting, to an IAB donor through a second IAB node related to a second cell group of the third IAB node, a message including backhaul RLF information indicating that the RLF for the first cell group is associated with the RLF for the backhaul of the first IAB node.

2. The method of claim 1, further comprising suspending transmission through a backhaul radio link control (RLC) channel related to the first cell group.

3. The method of claim 1,
wherein the first cell group comprises a master cell group (MCG),
wherein the second cell group comprises a secondary cell group (SCG), and
wherein the message is transmitted through a split signaling radio bearer (SRB) 1 or an SRB 3.

4. The method of claim 1,
wherein the first cell group comprises a secondary cell group (SCG), and
wherein the second cell group comprises a master cell group (MCG).

5. A method of a first integrated access and backhaul (IAB) node in a wireless communication system, the method comprising:
detecting a recovery failure of a radio link failure (RLF) for a backhaul of the first IAB node; and
transmitting, to a third IAB node, a backhaul RLF indicator related to the recovery failure of the RLF for the backhaul of the first IAB node,
wherein the first IAB node is related to a first cell group of the third IAB node,
wherein an RLF for the first cell group is determined to be detected based on the backhaul RLF indicator, and
wherein a message including backhaul RLF information indicating that the RLF for the first cell group is associated with the RLF for the backhaul of the first IAB node is transmitted to an IAB doner node through a second IAB node related to a second cell group of the third IAB node.

6. The method of claim 5,
wherein the first cell group comprises a master cell group (MCG),
wherein the second cell group comprises a secondary cell group (SCG), and
wherein the message is transmitted through a split signaling radio bearer (SRB) 1 or an SRB 3.

7. The method of claim 5,
wherein the first cell group comprises a secondary cell group (SCG), and
wherein the second cell group comprises a master cell group (MCG).

8. A third integrated access and backhaul (IAB) node in a wireless communication system, the third IAB node comprising:
a transceiver; and
a controller configured to:
control the transceiver to receive, from a first IAB node related to a first cell group of the third IAB node, a backhaul RLF indicator related to a recovery failure of a radio link failure (RLF) for a backhaul of the first IAB node,
determine that an RLF for the first cell group is detected based on the backhaul RLF indicator, and
control the transceiver to transmit, to an IAB donor through a second IAB node related to a second cell group of the third IAB node, a message including backhaul RLF information indicating that the RLF for the first cell group is associated with the RLF for the backhaul of the first IAB node.

9. The third IAB node of claim 8, further comprising suspending transmission through a backhaul radio link control (RLC) channel related to the first cell group.

10. The third IAB node of claim 8,
wherein the first cell group comprises a master cell group (MCG),
wherein the second cell group comprises a secondary cell group (SCG), and

11. The third IAB node of claim 10,
wherein the message is transmitted through a split signaling radio bearer (SRB) 1 or an SRB 3.

12. The third IAB node of claim 8,
wherein the first cell group comprises a secondary cell group (SCG), and
wherein the second cell group comprises a master cell group (MCG).

13. A first integrated access and backhaul (IAB) node in a wireless communication system, the first IAB node comprising:
a transceiver; and
a controller configured to:
detect a recovery failure of a radio link failure (RLF) for a backhaul of the first IAB node, and
control the transceiver to transmit, to a third IAB node, a backhaul RLF indicator related to the recovery failure of the RLF for the backhaul of the first IAB node,
wherein the first IAB node is related to a first cell group of the third IAB node,
wherein an RLF for the first cell group is determined to be detected based on the backhaul RLF indicator, and
wherein a message including backhaul RLF information indicating that the RLF for the first cell group is associated with the RLF for the backhaul of the first IAB node is transmitted to an IAB doner node through a second IAB node related to a second cell group of the third IAB node.

14. The first IAB node of claim 13,
wherein the first cell group comprises a master cell group (MCG),
wherein the second cell group comprises a secondary cell group (SCG), and
wherein the message is transmitted through a split signaling radio bearer (SRB) 1 or an SRB 3.

15. The first IAB node of claim 13,
wherein the first cell group comprises a secondary cell group (SCG), and
wherein the second cell group comprises a master cell group (MCG).
